(19) Europäisches Patentamt
European Patent Office
Office européen des brevets

(11) **EP 4 506 055 B1**

(12) **EUROPÄISCHE PATENTSCHRIFT**

(45) Veröffentlichungstag und Bekanntmachung des Hinweises auf die Patenterteilung:
**04.03.2026 Patentblatt 2026/10**

(21) Anmeldenummer: **23191020.9**

(22) Anmeldetag: **11.08.2023**

(51) Internationale Patentklassifikation (IPC):
**B01D 46/10** *(2006.01)* **B01D 46/52** *(2006.01)*
**B05B 14/43** *(2018.01)*

(52) Gemeinsame Patentklassifikation (CPC):
**B01D 46/522; B01D 46/10; B01D 46/523;**
**B05B 14/43;** B01D 2265/06

(54) **FILTER FÜR EIN SPRÜHBESCHICHTUNGSSYSTEM UND FILTERANORDNUNG**

FILTER FOR A SPRAY COATING SYSTEM AND FILTER ASSEMBLY

FILTRE POUR SYSTÈME DE REVÊTEMENT PAR PULVÉRISATION ET ENSEMBLE FILTRE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**12.02.2025 Patentblatt 2025/07**

(73) Patentinhaber: **Carl Freudenberg KG**
**69469 Weinheim (DE)**

(72) Erfinder:
• **Schumacher, Sascha**
**69483 Wald-Michelbach (DE)**
• **Schneider, Silvan**
**68526 Ladenburg (DE)**
• **Klaus, Jürgen**
**69502 Hemsbach (DE)**

(56) Entgegenhaltungen:
WO-A1-2020/035108 WO-A1-2023/062199
CN-A- 111 558 276 CN-A- 113 786 687

**Beschreibung**

Die Erfindung betrifft einen Filter für ein Sprühbeschichtungssystem, umfassend ein Gehäuse mit einer Einlassöffnung und einer Auslassöffnung, wobei in dem Gehäuse ein flächiges, zick-zack-förmig gefaltetes Filtermedium aufgenommen ist. Die Erfindung betrifft ferner eine Filteranordnung für ein Sprühbeschichtungssystem.

Stand der Technik

Ein derartiger Filter ist aus der WO 2023/062199 A1 bekannt. Derartige Filter sind zum Einsatz im Bereich von Sprühkabinen zur Aufnahme von Farbnebel geeignet und dienen der Filtration der aus der Sprühkabine abzuführenden Abluft. Die aus einer Sprühkabine abzuführende Abluft ist mit Partikeln behaftet, welche im Rahmen der Beschichtung eines Gegenstandes, beispielsweise einer Lackierung, in der Luft verbleibt und nicht an dem Gegenstand anhaftet. Derartige Partikel, bzw. Farbpartikel werden auch als Lacknebel oder Overspray bezeichnet.

Die WO 2020/035108 A1 betrifft ein Filtermodul zum Abscheiden von Verunreinigungen aus einem Verunreinigungen enthaltenden Rohgasstrom, umfassend wenigstens einen dreidimensionalen Filterstrukturkörper, durch welchen der Rohgasstrom leitbar ist, und einen äußeren Rahmen zur Aufnahme des Filterstrukturkörpers zwischen einer rohseitigen Öffnung und einer reinseitigen Öffnung. Der dreidimensionale Filterstrukturkörper umfasst wenigstens eine Stützstruktur und eine darauf angeordnete Filterlage. Die Stützstruktur weist wenigstens ein kammartig ausgebildetes Segment mit einer Basis auf, von der in Längslichtung der Basis voneinander beabstandete Zinken gemeinsam in eine Richtung abstehen. Eine Auslegerichtung der Filterlage erstreckt sich in Längsrichtung der Basis.

Die CN 111558276 A offenbart ein Filtermodul zur Abscheidung von Farbnebel in einem Luftstrom. Das Filtermodul umfasst eine Filterstruktur, die in einem Gehäuse montiert ist. Ein Lufteinlass ist an einem Ende des Gehäuses und ein Luftauslass am gegenüberliegenden anderen Ende ausgebildet. Die Filterstruktur bildet nacheinander einen Ablenkungsbereich und einen mehrschichtigen Filterbereich vom Lufteinlass zum Luftauslass. Der Ablenkungsbereich umfasst mindestens zwei Schichten und wird durch parallele Anordnung einer Vielzahl von Ablenkplatten mit U-förmigen Öffnungsstrukturen gebildet.

Die Menge Overspray, bzw. Lacknebel kann je nach Beschichtungsverfahren sehr groß sein und die Menge Overspray, bzw. Lacknebel kann die Hälfte der gesamten über ein Beschichtungssystem ausgebrachten Partikel bilden. Dementsprechend sind Filtersysteme, die der Reinigung der von der Sprühkabine abgeführten Luft dienen, einer hohen Partikelbelastung ausgesetzt, was sich beispielsweise auf die Standzeit des Filtersystems auswirkt.

Darstellung der Erfindung

Der Erfindung liegt die Aufgabe zugrunde, einen Filter für ein Sprühbeschichtungssystem bereitzustellen, der eine verlängerte Standzeit aufweist.

Diese Aufgabe wird mit den Merkmalen von Anspruch 1 gelöst. Auf vorteilhafte Ausgestaltungen nehmen die Unteransprüche Bezug.

Der erfindungsgemäße Filter für ein Sprühbeschichtungssystem umfasst ein Gehäuse mit einer Einlassöffnung und einer Auslassöffnung, wobei in dem Gehäuse ein flächiges, zick-zack-förmig gefaltetes Filtermedium aufgenommen ist, wobei das Filtermedium zur Einlassöffnung unter Bildung eines Sammelvolumens beabstandet ist.

Das in dem Gehäuse angeordnete Sammelvolumen, welches auch als Plenum bezeichnet werden kann, bewirkt eine gleichmäßigere Beladung des ebenfalls in dem Gehäuse aufgenommenen Filtermediums. Die mit Partikeln behaftete Luft strömt über die Einlassöffnung in das Gehäuse ein, verteilt sich zunächst gleichmäßig im Bereich des Sammelvolumens über die Oberfläche des Filtermediums, strömt anschließend durch das Filtermedium hindurch und verlässt schließlich das Gehäuse über die Auslassöffnung. Durch die Vergleichmäßigung der einströmenden Luft, insbesondere im Bereich des Sammelvolumens, erfolgt eine gleichmäßige Beladung des Filtermediums mit den Partikeln, woraus eine verlängerte Standzeit des Filtermediums resultiert.

Das Sammelvolumen kann sich über mindestens 1/4 und das gefaltete Filtermedium über höchstens 3/4 der Tiefe des Gehäuses erstrecken. Bei dieser Ausgestaltung nimmt das Sammelvolumen einen signifikanten Raum innerhalb des Gehäuses ein und es kann eine besonders gute Strömungshomogenisierung der einströmenden Luft erreicht werden. Dadurch kann dementsprechend eine besonders gleichmäßige Beladung des Filtermediums erfolgen.

Das Filtermedium kann form- und/oder kraftschlüssig in dem Gehäuse gehalten sein. Durch die kraft- und/oder formschlüssige Fixierung ist sichergestellt, dass das Filtermedium unter Bildung des Sammelvolumens stets von der Einlassöffnung beabstandet ist. Des Weiteren ist es denkbar, das Filtermedium zerstörungsfrei aus dem Gehäuse zu entfernen und getrennt zu entsorgen.

In dem Gehäuse können Stützelemente angeordnet sein, wobei das Filtermedium zumindest abschnittsweise an den Stützelementen anliegt. Dabei sind die Stützelemente vorzugsweise so ausgebildet, dass diese einerseits die Lage des Filtermediums innerhalb des Gehäuses sicherstellen. Andererseits können die Stützelemente auch die Zick-Zack-Gestalt des Filtermediums, also die Form des Filtermediums, vorgeben und ebenfalls sicherstellen.

Es können erste Stützelemente dem Sammelvolumen zugeordnet sein. Die ersten Stützelemente sichern dabei einen vorgegebenen Abstand des Filtermediums zur Einlassöffnung und damit die Bereitstellung des Sammelvolumens. Die ersten Stützelemente können streifenförmig ausgebildet sein und v-förmige Ausnehmungen aufweisen, die eine Formgebung der der Einlassöffnung zugewandten Kanten des Filtermediums bewirken. Die ersten Stützelemente können das Sammelvolumen in mehrere Teilvolumina unterteilen.

Die ersten Stützelement können sich bis über die Kante des Filtermediums hinaus erstrecken und Schultern ausbilden, an denen sich das Filtermedium abstützen kann. Dadurch verbessert sich die Stabilität des in dem Gehäuse fixierten Filtermediums.

Es können zweite Stützelemente vorgesehen sein, welche der Auslassöffnung zugeordnet sind. Die zweiten Stützelemente fixieren das Filtermedium im Bereich der Auslassöffnung und sichern das Filtermedium im Gehäuse. Die zweiten Stützelemente können streifenförmig ausgebildet sein und mit Ausnehmungen versehen sein, welche der Formgebung der der Auslassöffnung zugewandten Kanten des Filtermediums dienen.

Durch die Ausgestaltung der ersten Stützelemente und der zweiten Stützelemente ist es möglich, ein flächiges Filtermedium zu verwenden, welches durch die in die ersten Stützelemente und zweiten Stützelemente eingebrachten Ausnehmungen in eine Zick-Zack-Form gebracht wird.

Die der Auslassöffnung zugeordneten Kanten des Filtermediums sind derart geformt, dass sich auf der Einlassöffnung zugewandten Seite der Kanten Hinterschnitte ergeben. Von der Einlassöffnung in Richtung der Auslassöffnung betrachtet weiten sich dabei die auf die Kanten zulaufenden Abschnitte des Filtermediums im Bereich der Hinterschnitte wieder auf. Durch die Aufweitung erfolgt eine verzögerte Beladung des Filtermediums im Bereich der Kanten auf der Auslassseite und es kann vermieden werden, dass im Bereich der Kanten ein vorzeitiger Verschleiß des Filtermediums erfolgt. In den Bereichen der Hinterschnitte wird die lackbeladene Luft umgelenkt. Dabei können die Lackpartikel nur bedingt der Luftströmung folgen, so dass das Filtermedium im Bereich der Hinterschnitte langsamer mit Lackpartikeln beladen wird. Dementsprechend bewirkt die Anordnung der Hinterschnitte im Bereich der der Auslassöffnung zugeordneten Kanten eine weitere Verlängerung der Standzeit des Filters.

Die Formgebung des Filtermediums mit der Ausgestaltung der Hinterschnitte erfolgt vorzugsweise durch die zweiten Stützelemente, welche im Bereich der zu formenden Hinterschnitte schlüssellochartig geformt sind. Dabei können die Übergänge von den konischen Bereich zu den abgerundeten Hinterschnitten scharfkantig ausgestaltet sein, so dass sich ein poröses Filtermedium an den scharfkantigen Übergängen verhakt und dadurch ortsfest fixiert ist.

Die der Auslassöffnung zugeordneten Kanten können abgerundet sein. Dies ermöglicht eine besonders gute Vergleichmäßigung der Strömung und eine besonders große Verlängerung der Standzeit des Filtermediums. Im Querschnitt betrachtet können die Hinterschnitte im Wesentlichen kreisförmig ausgebildet sein. Vorzugsweise beträgt der Radius der kreisförmige Hinterschnitte zwischen 5 mm und 25 mm.

Das Filtermedium kann zumindest eine Lage aus Vliesstoff umfassen. Diese ist durch die Porosität des Materials besonders gut geeignet, Partikel aus einem Sprühnebel zu filtern. Des Weiteren kann sich das poröse Material des Filtermediums an Teilen des Filters, insbesondere an den Stützelementen verhaken und so die Fixierung des Filtermediums in dem Gehäuse verbessern. Dies ist insbesondere vorteilhaft, weil die Aufnahme von Sprühnebel mit einer relativ hohen Massenbeladung des Filtermediums einhergeht.

Dabei kann das Filtermedium einlagig oder mehrlagig ausgebildet sein und beispielsweise verschiedene Lagen an Vliesstoff mit verschiedener Porosität aufweisen. Ebenso ist denkbar, dass zumindest einzelne Lagen des Filtermediums elektrostatisch wirksam sind.

Das Gehäuse und/oder die Stützelemente können aus Karton ausgebildet sein. Dadurch ist der Filter formstabil und besonders kostengünstig und einfach herstellbar.

Eine erfindungsgemäße Filteranordnung für ein Sprühbeschichtungssystem umfasst eine dem Sprühnebel zugewandte erste Filterstufe und eine zweite Filterstufe, wobei die zweite Filterstufe ein Filter wie zuvor beschrieben ist.

Kurzbeschreibung der Zeichnung

Einige Ausgestaltungen des erfindungsgemäßen Filters werden nachfolgend anhand der Figuren näher erläutert. Diese zeigen, jeweils schematisch:

Fig. 1    einen Filter in räumlicher Darstellung vorne;
Fig. 2    den Filter in räumlicher Darstellung hinten;
Fig. 3    das Gehäuse des Filters im Schnitt;
Fig. 4    den Filter im Schnitt.

Ausführung der Erfindung

Die Figuren zeigen einen Filter 1 für ein Sprühbeschichtungssystem, umfassend ein Gehäuse 2 aus Karton mit einer Einlassöffnung 3 und einer Auslassöffnung 4. Das Gehäuse 2 ist im Wesentlichen quaderförmig ausgebildet und weist an einer Stirnseite eine Einlassöffnung 3 und an der gegenüberliegenden Stirnseite eine Auslassöffnung 4 auf. In dem Gehäuse 2 ist ein flächiges, zick-zack-förmig gefaltetes Filtermedium 5 aufgenommen. Das Filtermedium 5 umfasst eine Lage 9 aus Vliesstoff. In einer alternativen Ausgestaltung umfasst das Filtermedium 5 mehrere Lagen 9 aus Vliesstoff.

Das Filtermedium 5 ist derart im Gehäuse 2 angeordnet, dass das Filtermedium 5 zur Einlassöffnung 3 unter Bildung eines Sammelvolumens 6 beabstandet ist. In Bezug auf die Tiefe des Gehäuses 2 erstreckt sich das Sammelvolumen 6 über 1/4 der Tiefe und das gefaltete Filtermedium über 3/4 der Tiefe.

In dem Gehäuse 2 sind Stützelemente 7 angeordnet, wobei das Filtermedium 5 an den Stützelementen 7 anliegt. Erste Stützelemente 7' sind dem Sammelvolumen 6 zugeordnet und zweite Stützelemente 7" der Auslassöffnung 4. Die Stützelemente 7 sind jeweils streifenförmig ausgebildet und weisen V-förmige Ausnehmungen auf, die der Formgebung der der Einlassöffnung 3 bzw. Auslassöffnung 4 zugewandten Kanten des Filtermediums 5 dienen. Die Stützelemente 7 sind aus Karton ausgebildet. Durch die Stützelemente 7 ist das Filtermedium 5 verliersicher form- und kraftschlüssig in dem Gehäuse 2 gehalten.

Die der Auslassöffnung 4 zugeordneten Kanten 8 des Filtermediums 5 sind derart geformt, dass sich auf der der Einlassöffnung 3 zugewandten Seite der Kanten 8 Hinterschnitte 10 ergeben. Dabei sind die der Auslassöffnung 4 zugeordneten Kanten 8 abgerundet. Die Formgebung erfolgt dabei derart, dass sich gerundete Hinterschnitte 10 mit einem Radius von etwa 16 bis 20 mm ergeben. Die Tiefe der Hinterschnitte beträgt zwischen 7 mm und 12 mm. Die Ausgestaltung der Hinterschnitte 10 der Kanten 8 erfolgt durch entsprechende Formgebung der Ausnehmungen der zweiten Stützelemente 7".

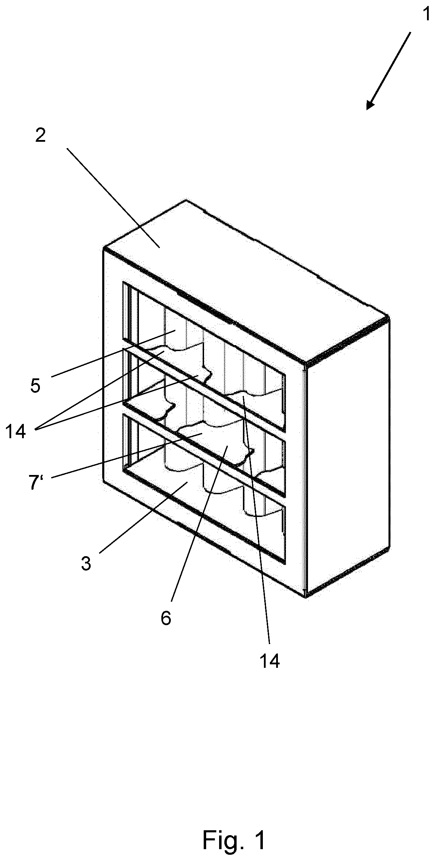

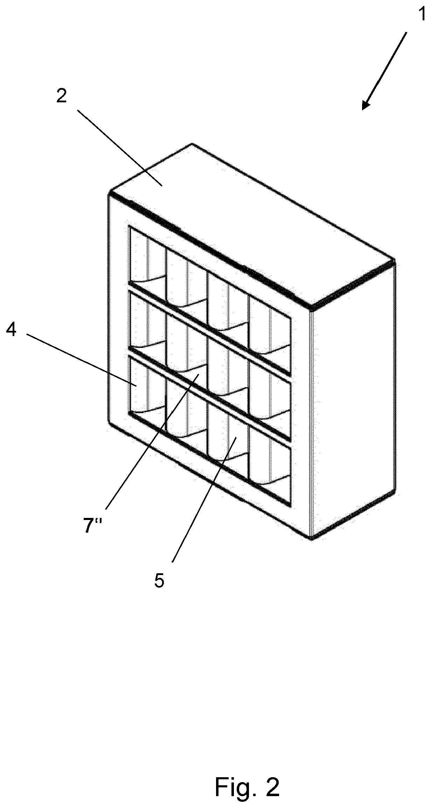

Die Figuren 1 und 2 zeigen den Filter 1 in räumlicher Darstellung, wobei in Figur 1 die Einlassöffnung 3, das Sammelvolumen 6 und die der Einlassöffnung 3 zugeordneten Stützelemente 7' zu erkennen sind und in Figur 2 die Auslassöffnung 4 und die der Auslassöffnung zugeordneten Stützelemente 7". Die ersten Stützelemente 7' unterteilen das Sammelvolumen 6 in drei Teilvolumina.

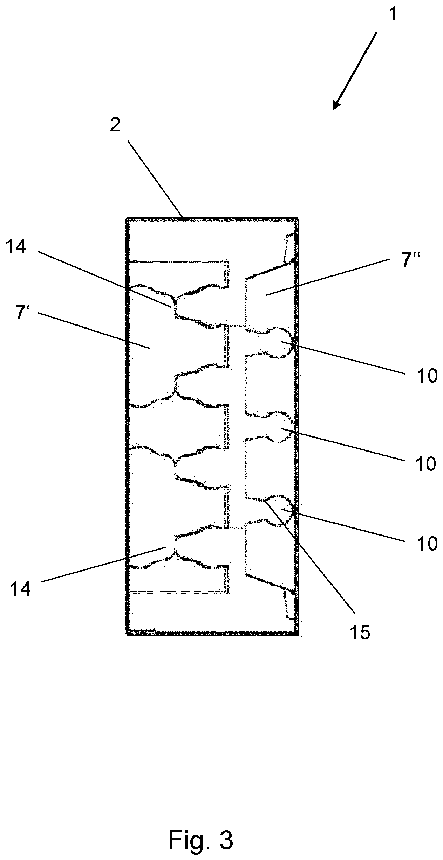

Figur 3 zeigt das Gehäuse 2 mit den darin angeordneten Stützelementen 7', 7" im Schnitt. Zu erkennen sind insbesondere die V-förmigen Ausnehmungen in den Stützelementen 7', 7" für die Formgebung des Filtermediums 5 sowie der kreisförmigen Erweiterungen in den Ausnehmungen für die Ausgestaltung der kreisförmigen Hinterschnitte 10 in dem Filtermedium 5.

Die ersten Stützelemente 7' überdecken die dem Sammelvolumen 6 zugewandten Filterkanten des Filtermediums 5 und bilden Schultern 14 aus, welche das Filtermedium 5 im Bereich der Filterkanten abstützen.

Die zweiten Stützelemente 7" weisen schlüssellochförmige Ausnehmungen auf, in denen sich die Hinterschnitte 10 des Filtermediums 5 ausbilden. Der Übergang 15 zwischen konischem Abschnitt und kreisförmigem Abschnitt ist scharfkantig ausgebildet, so dass sich das aus porösem Material bestehende Filtermedium 5 in den Übergängen 15 an den zweiten Stützelementen 7" verhakt.

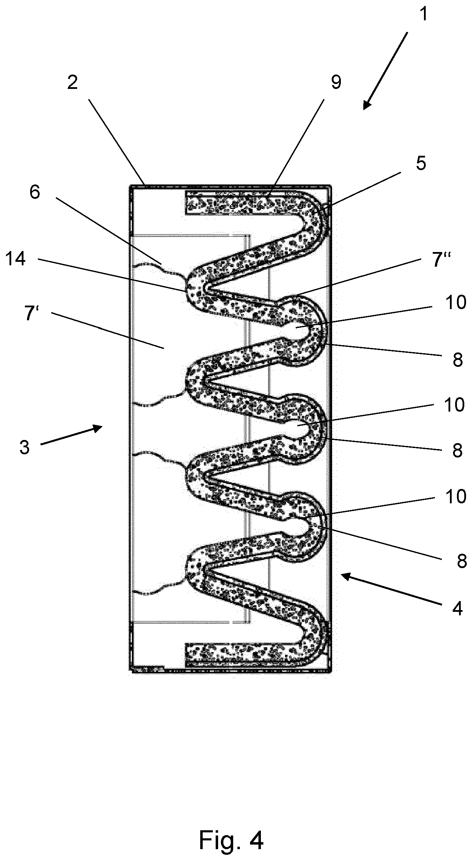

Figur 4 zeigt den Filter 1 im Schnitt. In dieser Figur sind die Hinterschnitte 10 in dem zick-zack-förmig gefalteten Filtermedium 5 zu erkennen, die durch die Formgebung der Stützelemente 7" ausgestaltet sind. Des Weiteren ist das Sammelvolumen 6 gezeigt.

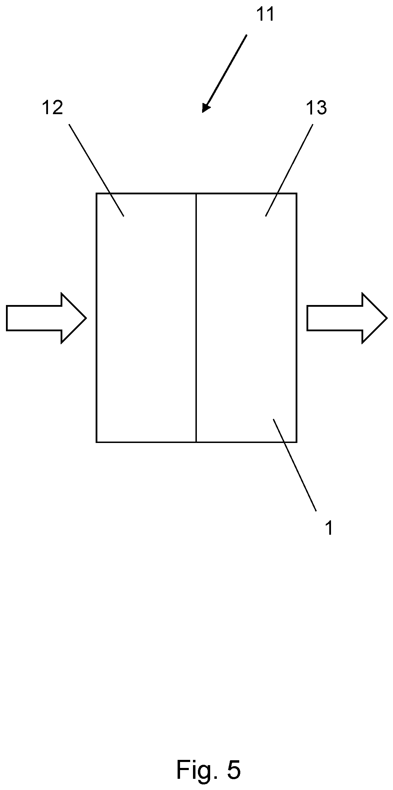

Figur 5 zeigt einen Filteranordnung 11 für ein Sprühbeschichtungssystem, wobei der Filter 1 Bestandteil der Filteranordnung 11 ist. Die Filteranordnung 11 dient der Filtration von Sprühnebel, insbesondere der Aufnahme von Overspray. Die Filteranordnung 11 weist eine dem Sprühnebel zugewandte erste Filterstufe 12 und eine nachfolgende zweite Filterstufe 13 auf, wobei die zweite Filterstufe 13 ein Filter 1 gemäß der Figuren 1 bis 4 ist.

## Patentansprüche

1. Filter (1) für ein Sprühbeschichtungssystem, umfassend ein Gehäuse (2) mit einer Einlassöffnung (3) und einer Auslassöffnung (4), wobei in dem Gehäuse (2) ein flächiges, zick-zack-förmig gefaltetes Filtermedium (5) aufgenommen ist, **dadurch gekennzeichnet, dass** das Filtermedium (5) zur Einlassöffnung (3) zur Strömungshomogenisierung unter Bildung zumindest eines Sammelvolumens (6) beabstandet ist, **dadurch gekennzeichnet, dass** die der Auslassöffnung (4) zugeordneten Kanten (8) des Filtermediums (5) derart geformt sind, dass sich auf der der Einlassöffnung (3) zugewandten Seite der Kanten (8) Hinterschnitte (10) ergeben.

2. Filter nach Anspruch 1, **dadurch gekennzeichnet, dass** das Filtermedium (5) form- und/oder kraftschlüssig in dem Gehäuse (2) gehalten ist.

3. Filter nach Anspruch 1 oder 2, **dadurch gekennzeichnet, dass** in dem Gehäuse (2) Stützelemente (7) angeordnet sind, wobei das Filtermedium (5) zumindest abschnittsweise an den Stützelementen (7) anliegt.

4. Filter nach Anspruch 3, **dadurch gekennzeichnet, dass** erste Stützelemente (7') dem Sammelvolumen (6) zugeordnet sind.

5. Filter nach Anspruch 4, **dadurch gekennzeichnet, dass** aus den ersten Stützelementen (7') Schultern (14) ausgebildet sind, an welchen sich das Filtermedium (5) abstützt.

6. Filter nach einem der Ansprüche 3 bis 5, **dadurch gekennzeichnet, dass** zweite Stützelemente (7") der Auslassöffnung (4) zugeordnet sind.

7. Filter nach Anspruch 6, **dadurch gekennzeichnet, dass** sich das Filtermedium (5) abschnittsweise an den zweiten Stützelementen (7") verhakt.

8. Filter nach einem der Ansprüche 1 bis 7, **dadurch gekennzeichnet, dass** die der Auslassöffnung (4) zugeordneten Kanten (8) abgerundet sind.

**9.** Filter nach einem der Ansprüche 1 bis 8, **dadurch gekennzeichnet, dass** das Filtermedium (5) zumindest eine Lage (9) aus Vliesstoff umfasst.

**10.** Filter nach einem der Ansprüche 1 bis 9, **dadurch gekennzeichnet, dass** das Gehäuse (2) und/oder die Stützelemente (7) aus Karton ausgebildet sind.

**11.** Filter nach einem der Ansprüche 1 bis 10, **dadurch gekennzeichnet, dass** sich das Sammelvolumen (6) über mindestens ¼ der Tiefe und das gefaltete Filtermedium (5) über höchstens ¾ der Tiefe des Gehäuses (2) erstreckt.

**12.** Filteranordnung (11) für eine Sprühbeschichtungssystem, umfassend eine dem Sprühnebel zugewandte erste Filterstufe (12) und eine der ersten Filterstufe (12) nachgeordnete zweite Filterstufe (13), wobei die zweite Filterstufe (13) ein Filter (1) nach einem der vorherigen Ansprüche ist.

**Claims**

**1.** Filter (1) for a spray-coating system, comprising a housing (2) that has an inlet opening (3) and has an outlet opening (4), wherein a flat filter medium (5) folded in zigzag form is accommodated in the housing (2), **characterized in that** the filter medium (5) is spaced apart from the inlet opening (3) for flow homogenization, with formation of at least one collection volume (6), **characterized in that** those edges (8) of the filter medium (5) which are associated with the outlet opening (4) are shaped in such a way that, on that side of the edges (8) which faces towards the inlet opening (3), undercuts (10) are formed.

**2.** Filter according to Claim 1, **characterized in that** the filter medium (5) is held in a form-fitting and/or force-fitting manner in the housing (2).

**3.** Filter according to Claim 1 or 2, **characterized in that** supporting elements (7) are arranged in the housing (2), wherein the filter medium (5) at least sectionally abuts against the supporting elements (7).

**4.** Filter according to Claim 3, **characterized in that** first supporting elements (7') are associated with the collection volume (6).

**5.** Filter according to Claim 4, **characterized in that** shoulders (14) on which the filter medium (5) is supported are formed from the first supporting elements (7').

**6.** Filter according to one of Claims 3 to 5, **character-**

**ized in that** second supporting elements (7") are associated with the outlet opening (4).

**7.** Filter according to Claim 6, **characterized in that** the filter medium (5) is caught sectionally at the second supporting elements (7").

**8.** Filter according to one of Claims 1 to 7, **characterized in that** the edges (8) associated with the outlet opening (4) are rounded.

**9.** Filter according to one of Claims 1 to 8, **characterized in that** the filter medium (5) comprises at least one layer (9) of nonwoven material.

**10.** Filter according to one of Claims 1 to 9, **characterized in that** the housing (2) and/or the supporting elements (7) are formed from cardboard.

**11.** Filter according to one of Claims 1 to 10, **characterized in that** the collection volume (6) extends over at least $\frac{1}{4}$ of the depth, and the folded filter medium (5) extends over at most $\frac{3}{4}$ of the depth, of the housing (2).

**12.** Filter arrangement (11) for a spray-coating system, comprising a first filter stage (12), which faces towards the spray mist, and a second filter stage (13), which is downstream of the first filter stage (12), wherein the second filter stage (13) is a filter (1) according to one of the preceding claims.

**Revendications**

**1.** Filtre (1) pour un système de revêtement par pulvérisation, comprenant un boîtier (2) avec une ouverture d'entrée (3) et une ouverture de sortie (4), un milieu filtrant plat (5) plié en zigzag étant reçu dans le boîtier (2), **caractérisé en ce que** le milieu filtrant (5) est espacé de l'ouverture d'entrée (3) pour l'homogénéisation d'écoulement tout en formant au moins un volume de collecte (6), **caractérisé en ce que** les bords (8) du milieu filtrant (5) associés à l'ouverture de sortie (4) sont formés de telle manière que des contre-dépouilles (10) apparaissent sur le côté des bords (8) tourné vers l'ouverture d'entrée (3).

**2.** Filtre selon la revendication 1, **caractérisé en ce que** le milieu filtrant (5) est maintenu dans le boîtier (2) par complémentarité de forme et/ou à force.

**3.** Filtre selon la revendication 1 ou 2, **caractérisé en ce que** des éléments d'appui (7) sont disposés dans le boîtier (2), le milieu filtrant (5) reposant au moins par sections sur les éléments d'appui (7).

4. Filtre selon la revendication 3, **caractérisé en ce que** des premiers éléments d'appui (7') sont associés au volume de collecte (6).

5. Filtre selon la revendication 4, **caractérisé en ce que** des épaulements (14), sur lesquels le milieu filtrant (5) prend appui, sont formés à partir des premiers éléments d'appui (7').

6. Filtre selon l'une des revendications 3 à 5, **caractérisé en ce que** des deuxièmes éléments d'appui (7") sont associés à l'ouverture de sortie (4).

7. Filtre selon la revendication 6, **caractérisé en ce que** le milieu filtrant (5) s'accroche par sections aux deuxièmes éléments d'appui (7").

8. Filtre selon l'une des revendications 1 à 7, **caractérisé en ce que** les bords (8) associés à l'ouverture de sortie (4) sont arrondis.

9. Filtre selon l'une des revendications 1 à 8, **caractérisé en ce que** le milieu filtrant (5) comprend au moins une couche (9) de non-tissé.

10. Filtre selon l'une des revendications 1 à 9, **caractérisé en ce que** le boîtier (2) et/ou les éléments d'appui (7) sont formés à partir de carton.

11. Filtre selon l'une des revendications 1 à 10, **caractérisé en ce que** le volume de collecte (6) s'étend au moins sur $\frac{1}{4}$ la profondeur et le milieu filtrant (5) plié s'étend au maximum $\frac{3}{4}$ sur la profondeur du boîtier (2).

12. Ensemble de filtre (11) pour un système de revêtement par pulvérisation, comprenant un premier étage de filtre (12) tourné vers le brouillard de pulvérisation et un deuxième étage de filtre (13) disposé en aval du premier étage de filtre (12), le deuxième étage de filtre (13) étant un filtre (1) selon l'une des revendications précédentes.

Fig. 1

Fig. 2

1

2

14

7'

7"

10

10

10

15

14

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2023062199 A1
- WO 2020035108 A1

- CN 111558276 A